# EUROPÄISCHE PATENTSCHRIFT

(11) **EP 2 842 738 B1**
(45) Veröffentlichungstag und Bekanntmachung des Hinweises auf die Patenterteilung: **24.06.2020**
(21) Anmeldenummer: 14002519.8
(22) Anmeldetag: 21.07.2014
(51) Int. Cl.: B32B 18/00, H05B 3/14, H05B 3/26, H05B 3/28

(54) **Verfahren zur Herstellung eines keramischen Heizelements**
Method of producing a ceramic heating element
Procédé de fabrication d'un élément de chauffage en céramique

(30) Priorität: 26.08.2013 DE 102013014030; 26.08.2013 DE 202013007509 U
(43) Veröffentlichungstag der Anmeldung: 04.03.2015
(73) Patentinhaber: FCT Ingenieurkeramik GmbH, 96528 Rauenstein (DE)
(72) Erfinder: Walter, Martin, 96515 Sonneberg (DE); Wötting, Gerhard Dr., 96515 Sonneberg (DE)
(74) Vertreter: Weihrauch, Frank

(56) Entgegenhaltungen:
- EP-B1- 0 711 496
- DE-A1-102006 062 374
- DE-A1-102007 010 099
- DE-C2- 3 712 128
- US-A- 4 205 363
- US-A1- 2001 019 048
- US-A1- 2002 100 753
- CHARTIER T ET AL: "OXIDATION RESISTANCE AND ELECTRICAL PROPERTIES OF SILICON CARBIDE ADDED WITH AL2O3, ALN, Y2O3 AND NIO", JOURNAL OF MATERIALS SCIENCE, KLUWER ACADEMIC PUBLISHERS, DORDRECHT, Bd. 36, Nr. 15, 1. August 2001 (2001-08-01), Seiten 3793-3800, XP001068074, ISSN: 0022-2461, DOI: 10.1023/A:1017990220468

## Beschreibung

Die Erfindung betrifft ein Verfahren zur Herstellung eines keramischen Heizelements auf Basis von Siliziumcarbid.

Aus dem Stand der Technik ist es bekannt, in Haushaltsgeräten und auch Heizanlagen für technische und industrielle Zwecke, die Wärme nach dem ohmschen Widerstandsprinzip mit stromdurchflossenen Widerständen, den sogenannten Heizleitern, zu erzeugen, welche meist gegenüber der Umgebung mit mineralischen Isolierstoffen elektrisch isoliert werden.

Zur Anwendung kommen in diesem Zusammenhang insbesondere flache Bauformen beispielsweise für Bügeleisen oder Kochplatten, patronenförmige Ausführungen beispielsweise für Lötkolben oder stabförmige Ausführungen in Form sogenannter Heizpatronen. Häufig wird der Heizleiter dabei von einer festgepressten Isoliermasse, zum Beispiel aus Magnesiumoxid (MgO) gehalten und geschützt, die wiederum von einem Metallrohr aus Stahl oder Kupfer umgeben ist. Da die mineralischen Isolierstoffe häufig eine schlechte Wärmeleitfähigkeit aufweisen, ist die Leistung derartiger Heizelemente begrenzt und die Trägheit vergleichsweise hoch.

Es ist ferner bekannt, für höhere Temperaturen auch Quarzglas zur Ummantelung einzusetzen oder die Heizleiter gänzlich ohne Ummantelung in Glüh- und Sinteröfen ohne Kontakt zu den umgebenden Strukturteilen einzusetzen.

Die durch den Heizleiter erzielbare Temperatur hängt primär von dessen Art ab. Legierte Stähle mit Nickel (Ni), Chrom (Cr) und/oder Aluminium (AI) ermöglichen dabei Temperaturen von maximal circa 1000 C, Heizleiter aus Molybdän (Mo), Platin (Pt), Wolfram (W) oder auch nichtmetallische Heizer aus Siliziumcarbid (SiC), Molybdändisilizid (MoSi₂) oder Graphit auch deutlich höhere Temperaturen.

Dabei begrenzt die mit steigender Temperatur zunehmende Reaktionsfähigkeit der der Heizleiter-Materialien selbst oder auch der kombinierten Stoffe mit der jeweils umgebenden Atmosphäre häufig ihre maximale Gebrauchstemperatur und bedarf entsprechender Schutzmaßnahmen wie zum Beispiel durch Schutzgase.
Werden nach dem ohmschen Widerstandsprinzip funktionierende Heizelemente nicht frei in Öfen angeordnet, sondern in eine metallische Umgebung beispielsweise in Maschinen oder Apparaten eingebaut, so erfordert dies zusätzliche, isolierende Maßnahmen, um Kurzschlüsse zu vermeiden. Diese Maßnahmen führen nachteilig zu einer relativ hohen thermischen Trägheit und reduzieren auch den Wirkungsgrad der Heizer, da der Wärmeübergang erschwert wird.

Mechanisch stabile, korrosions- und oxidationsbeständige und schnell reagierende Heizleiter hoher spezifischer Leistung zum Einbau in Maschinen und Apparate können mit den oben genannten Ansätzen nicht bereitgestellt werden.

Zur Bereitstellung derartiger Heizleiter sind aus dem Stand der Technik ebenfalls bereits Lösungen bekannt.
Beispielsweise werden in diesem Zusammenhang Dieselglühkerzen eingesetzt, welche nahezu ausschließlich aus Siliziumnitrid gefertigt werden und welche als Heizelemente entweder eingesinterte Drähte aus Wolfram, Molybdän, Platin oder ähnlichen Refraktärmetallen oder aber eine intrinsische Leitfähigkeit durch eine Kombination von Siliziumnitrid mit leitfähigen keramischen Phasen wie Molybdänsilizid oder Wolframsilizid oder ähnlichen aufweisen.

Eine weitere Lösung stellen diesbezüglich flächige, schichtförmig aufgebaute Heizer aus Siliziumnitrid oder Aluminiumnitrid dar, in welchen ein Basismaterial mit leitfähigen Phasen wie etwa Metall-Carbiden, -Boriden oder -Siliziden versehen wird. Die notwendige Verdichtung des Basismaterials mit den leitfähigen Phasen beziehungsweise Schichten wird in diesem Fall in der Regel durch Heißpressen bereitgestellt, was nachteilig zu einem entsprechend hohen Bereitstellungsaufwand führt.

In US 2002 0100 753 A1 wird ein monolithisches ohmsches Heizelement aus einer leitfähigen, dotierten Keramik, die vollständig in einem nicht dotierten keramischen Material eingebettet ist, beschrieben. Dabei wird Siliziumcarid als dotiertes und nicht dotiertes keramisches Material und Stickstoff als Dotierstoff beschrieben. Das Heizelement wird in einem Umformwerkzeug für Halbleiter benutzt.

Darüber hinaus wird in DE 10 2007 010 099 A1 ein beheizbares Werkzeug für eine Kunststoff- oder Metallschmelze verarbeitende Vorrichtung beschrieben, die ein Trägermaterial und eine darauf aufgebrachte Heizeinrichtung aus einer elektrisch leitenden Keramik und einer Kavitätsoberfläche umfasst, wobei zumindest zwischen dem Trägermaterial und der elektrisch leitenden Keramik eine elektrische Isolierschicht angeordnet ist. Zur Bereitstellung dieser Isolierschicht werden drei Alternativen beschrieben: eine thermische Oxidation des Keramikmaterials, beispielsweise von Si₃N₄/TiN unter Bildung einer nicht leitfähigen Außenhaut auf dem Keramikmaterial, durch Aufbringen einer Isolationsschicht aus Polymeren, wodurch allerdings die Einsatztemperatur auf ca. 400° C beschränkt wird, oder durch Abscheiden isolierender Schichtwerkstoffe durch physikalische oder chemische Verfahren wie PVD (physical vapour deposition) oder CVD (chemical vapour deposition), durch Plasma- oder thermisches Spritzen. Der Nachteil der hier offenbarten Lösung liegt insbesondere in dem hohen technischen Aufwand zur Bereitstellung der Isolierschicht.

Eine weitere Lösung offenbart die Druckschrift DE 37 12 128 C2. Hierin wird ein Werkzeug zum Warmumformen bei Prägeformprozessen beschrieben, welches direkt unter dem Abformwerkzeug einen Formkörper aus elektrisch leitfähiger Keramik aufweist, der direkt beheizbar ist, im Wärme leitenden Kontakt zum Werkzeug steht und gegenüber der Umformmaschine durch eine Isolationsplatte thermisch und elektrisch isoliert ist. Die Formkörper aus beheizbarer Keramik können verschiedenartigen Aufbau aufweisen. Einige Keramiken bestehen beispielsweise aus Al₂O₃, dem eine elektrisch leitende, nichtoxidische Keramik zugesetzt ist. Andere bestehen aus mehrphasigen Keramiken mit elektrisch leitenden Anteilen. Eine spezielle Form weist zwei äußere Bereiche und mindestens einen inneren Bereich aus einer Keramik auf, wobei die äußeren Bereiche mit einem elektrischen Leiter kontaktierbar und der innere Bereich aufheizbar ist. Dabei weist die Keramik der äußeren Bereiche eine höhere elektrische Leitfähigkeit auf als die Keramik des inneren Bereichs. Bei der Keramik handelt es sich um eine Mehrphasenkeramik, welche aus mindestens einer Keramikphase mit niedriger und mindestens einer Keramikphase mit höherer elektrischer Leitfähigkeit besteht, wobei der Anteil der Phase mit der höheren elektrischen Leitfähigkeit in den zwei äußeren Bereichen höher ist als in dem inneren Bereich. Bevorzugte Mehrphasenkeramiken bestehen aus einer nicht oder schlecht leitenden Matrixkeramik, in die als weitere Phase mindestens eine der elektrisch leitfähigen Verbindungen eingebettet ist.

Nachteile der hier offenbarten Lösung liegen insbesondere darin, dass die benötigten Werkstoffe sehr komplex und dementsprechend teuer in der Bereitstellung sind. Zudem sind bei einem Einbau derartiger Werkstoffe in eine metallische Umgebung weitere, elektrische Isolationsmaßnahmen notwendig.

Die Aufgabe der Erfindung bildet es, unter Überwindung der Nachteile des Standes der Technik ein kostengünstiges Herstellungsverfahren für ein Heizelement bereitzustellen, welches zum einen mechanisch hoch belastbar, abrasions-, korrosions- und oxidationsbeständig sowie thermisch schnell reagierend ist, mit einer elektrisch isolierenden Oberfläche ausgebildet werden kann, in großer Formenvarianz bereitstellbar ist.

Die Aufgabe wird durch die im Patentanspruch 1 aufgeführten Merkmale gelöst.

Bevorzugte Weiterbildungen ergeben sich aus dem Unteranspruch.

Ein durch das erfindungsgemäße Verfahren hergestelltes Heizelement wird durch einen Siliziumcarbid-Körper mit einem Widerstandsheizleiter gebildet, welcher eine elektrisch isolierende Zone und eine elektrisch leitende Zone aufweist, wobei beide Zonen aus sinterfähigen Siliziumcarbid-Zusammensetzungen gebildet werden. Das Siliziumcarbid in der elektrisch isolierenden Zone liegt als zusätzlich N-dotiertes (stickstoffdotiertes) Siliziumcarbid vor.

Durch die N-Dotierung, also das Einbringen von Stickstoff-Fremdatomen in das Kristallgitter des Siliziumcarbids der elektrisch isolierenden Zone, wird ein hoher elektrischer Widerstand der elektrisch isolierenden Zone bereitgestellt. Der technologische Hintergrund einer Dotierung an sich ist dem Fachmann aus dem Stand der Technik bekannt, sodass vorliegend auf eine detaillierte Beschreibung hierzu verzichtet wird.

Erfindungsgemäß wird der Widerstandsheizleiter durch die elektrisch leitende Zone des Siliziumcarbid-Körpers gebildet, wobei sich die elektrisch leitende Zone bei einer Beaufschlagung mit einer elektrischen Spannung aufgrund des sich durch den Widerstand einstellenden Stromes nach dem ohmschen Widerstandsprinzip erwärmt.

Die elektrisch isolierende Zone und die elektrisch leitende Zone liegen nach der Formung des Grünteils und vor der abschließenden Bereitstellung des Heizelements durch Versinterung als getrennte und hierbei vorzugsweise als Schichten, geformt aus Pulvern oder Granulaten, vor.

Elektrisch isolierende und elektrisch leitende Zone sind besonders vorteilhaft mittels Sintern derart miteinander verbunden, dass der Siliziumcarbid-Körper monolithisch vorliegt.

Unter einer monolithischen Ausbildung wird im vorliegenden Zusammenhang verstanden, dass der Siliziumcarbid-Körper als dichter und kompakter, einheitlicher Körper ausgebildet ist, wobei die elektrisch isolierende Zone und die elektrisch leitende Zone in dem Siliziumcarbid-Körper lediglich Abschnitte mit unterschiedlichen elektrischen Eigenschaften bilden.
Anders ausgedrückt wird durch das Sintern ein durchgehendes Gefüge ohne Unterbrechung zwischen den einzelnen Zonen zu einem dichten und kompakten Siliziumcarbid-Körper bereitgestellt, obwohl gleichzeitig als besonderer Vorteil die unterschiedlichen, physikalischen Eigenschaften der Zonen in Bezug auf die elektrische Leitfähigkeit erhalten bleiben. Zudem unterscheiden sich als besonderer Vorteil die mechanischen und Korrosionseigenschaften der unterschiedlichen Zonen des Siliziumcarbid-Körpers kaum.

Zur Bereitstellung der elektrisch isolierenden Zone werden Siliziumcarbid-Zusammensetzungen mit einem möglichst hohen spezifischen elektrischen Widerstand p angewendet, wobei der spezifische elektrische Widerstand ρ ≥ 1 ∗ 10⁶ Ω ∗ *cm*, vorzugsweise ≥ 1 ∗ 10⁷ Ω ∗ *cm* beträgt.
Demgegenüber werden zur Bereitstellung der elektrisch leitenden Zone Siliziumcarbid-Zusammensetzungen mit einem ausreichend geringen spezifischen elektrischen Widerstand ρ angewendet, wobei der spezifische elektrische Widerstand ρ ≤ 5 ∗ 10³ Ω ∗ *cm,* vorzugsweise ≤ 500 Ω ∗ *cm* beträgt.
Die Widerstandsangaben beziehen sich auf Raumtemperatur (20° C).

Hierbei wurde gefunden, dass die elektrisch isolierende Zone und die elektrisch leitende Zone, aufgrund der Einheitlichkeit des Siliziumcarbids als Basismaterial und der somit vorliegenden nahezu stofflichen Gleichheit der Zonen, besonders unkompliziert zu dem monolithischen Siliziumcarbid-Körper gesintert werden können.
Aufgrund dessen kommt es, als besonderer Vorteil, während des Sinterns zu keinerlei Ablösungen oder Rissbildungen zwischen und in den Zonen des Siliziumcarbid-Körpers, durch welche dessen monolithisches, dichtes Gefüge und dessen makroskopische Beschaffenheit gestört werden könnten.

Ferner wird erfindungsgemäß eine Oberflächenschicht des Siliziumcarbid-Körpers zumindest abschnittsweise durch die elektrisch isolierende Zone gebildet. Hierdurch wird als besonderer Vorteil bewirkt, dass das Heizelement nach außen elektrisch isoliert vorliegt und somit keine elektrische Übertragung, beispielsweise in ein zu beheizendes Objekt oder in eine metallische Trägerstruktur, stattfinden kann.

Auf diese Weise können zum Beispiel auch metallische oder sonstige elektrisch leitende Objekte gefahrlos durch das erfindungsgemäße Heizelement beheizt werden.

Die abschnittsweise Bildung der Oberflächenschicht durch die elektrisch isolierende Zone kann vorliegend so ausgeführt sein, dass entweder nur bestimmte, festgelegte Abschnitte der Oberflächenschicht oder die gesamte Oberflächenschicht durch die elektrisch isolierende Zone gebildet werden. Auf diese Weise können beispielsweise gezielte Abschnitte der Oberflächenschicht des Heizelements elektrisch isolierend und andere Abschnitte der Oberflächenschicht elektrisch leitend ausgeführt werden.

Darüber hinaus sind der elektrisch leitenden Zone erfindungsgemäß elektrische Anschlussmittel zugeordnet, durch welche ein elektrischer Strom in die elektrisch leitende Zone ein- beziehungsweise ausgeleitet wird.

Als Anschlussmittel kommen in diesem Zusammenhang beispielsweise Löt- oder Steckanschlüsse zum Einsatz.

Der besondere technologische Vorteil des durch das erfindungsgemäße Verfahren hergestellten Heizelements besteht darin, dass dieses durch einen einfachen Aufbau sowie mittels konventionellem, drucklosem Sintern bereitgestellt werden kann.

Auf aufwändige Herstellungsverfahren, wie beispielsweise Heißpressen, kann somit vorteilhaft verzichtet werden. Als Vorteil sind erfindungsgemäße Heizelemente auch in komplizierten Geometrien herstellbar.

Zudem basiert das Heizelement, aufgrund der ausschließlichen Verwendung von sinterfähigen Siliziumcarbid-Zusammensetzungen, lediglich mit üblichen Sinterhilfsmitteln in geringen Konzentrationen, auf gut verfügbaren, kostengünstigen Rohstoffen und kann somit besonders kostengünstig bereitgestellt werden.

Als weiteren Vorteil weist das Heizelement vollumfänglich die für Siliziumcarbid typischen Eigenschaften hinsichtlich Wärmeleitfähigkeit, Festigkeit, Abrasions-, Korrosions- und Oxidationsbeständigkeit und Hochtemperaturbeständigkeit auf, wobei durch das Heizelement sehr hohe Temperaturen bereitgestellt werden können.

Ein solches Heizelement eignet sich somit insbesondere für die Anwendung in Machinen, oder in Aggregaten, beziehungsweise Apparaten, welche die obenstehenden Eigenschaften aufweisen müssen, beispielsweise in einem Umformwerkzeug.

Aufgrund der deutlich besseren Wärmeleiteigenschaften des Siliziumcarbids, insbesondere gegenüber z. B. Si₃N₄, Al₂O₃ oder Stahl, werden zudem, im Vergleich mit herkömmlichen Lösungen, ein besonders schnelles Aufheizen an der Oberfläche und somit eine sehr gute Reaktionsfähigkeit des Heizelements bereitgestellt.

Gleichzeitig weisen die Zonen des Heizelements nahezu gleiche und geringe thermische Ausdehnungskoeffizienten auf, wodurch innere Spannungen aufgrund unterschiedlicher Ausdehnungen während des Erwärmens wirkungsvoll gering gehalten werden.

Dank dem erfindungsgemäßen Verfahren kann ein Heizelement bereitgestellt werden, welches die besonderen Materialeigenschaften von Siliziumcarbid mit dem technologisch einfachen Prinzip der Erwärmung durch den ohmschen Widerstand und einer unkomplizierten und kostengünstigen Herstellung verbindet.

Als weiterer technologischer Vorteil kann die elektrisch leitende Zone eines erfindungsgemäßen Heizelements in Form und spezifischen Widerstand variabel, insbesondere hersteller- oder benutzerdefiniert, ausgebildet werden.
In diesem Zusammenhang ist es beispielsweise möglich, die elektrisch leitende Zone an festgelegten Positionen auszusparen und so gezielte Abschnitte des Siliziumcarbid-Körpers bereitzustellen, an welchen keine elektrisch leitende Zone vorhanden ist. Dies kann insbesondere an Stellen vorteilhaft sein, an denen Anschraubpunkte zur Aufnahme metallischer Schrauben vorgesehen sind und an denen eine elektrische Übertragung von dem Heizelement in die Schrauben verhindert werden soll.
Zudem können auf diese Weise gezielt Bereiche des Heizelements geschaffen werden, in welchen durch das Aussparen der elektrisch leitenden Zone eine geminderte Heizleistung vorliegt.

Demgegenüber ermöglicht die variable Ausbildbarkeit der elektrisch leitenden Zone die Schaffung von Engstellen innerhalb des Widerstandsheizleiters, in welchen es aufgrund des verengten Querschnitts zu einem abschnittsweise erhöhten elektrischen Widerstand und somit zu einer höheren Heizleistung kommt. Auf diese Weise können somit Abschnitte innerhalb des Heizelements, sogenannte hot spots, bereitgestellt werden, welche sich schneller und kurzzeitig stärker aufheizen als andere Abschnitte.

In einer vorteilhaften Weiterentwicklung weist das Heizelement zusätzliche Kühlelemente, beispielsweise in Form von kühlmitteldurchflossenen Kühlkanälen auf, durch welche kühlere Abschnitte geschaffen werden können oder insgesamt ein Abkühlen des Heizelements beschleunigt werden kann.

Sowohl die elektrisch leitende Zone als auch die elektrisch isolierende Zone kann jeweils in mehreren Abschnitten ausgebildet sein. Auf diese Weise wird es insbesondere ermöglicht, ein keramisches Heizelement mit mehreren getrennten oder gegebenenfalls auch verbundenen Heizkreisen bereitzustellen.

Das durch das erfindungsgemäße Verfahren hergestellte Heizelement kann unterschiedliche Formen aufweisen. Beispielsweise kann es als Flächenheizelement, Heizstab mit einseitigem oder zweiseitigem Anschluss, als Behältnis oder als unsymmetrisches Formteil vorliegen.

In einer besonders vorteilhaften Weiterbildung des durch das erfindungsgemäße Verfahren hergestellten Heizelements sind die elektrisch isolierende Zone als Deckschicht und als Basisschicht und die elektrisch leitende Zone als eine, zwischen Deck- und Basisschicht angeordnete, Zwischenschicht ausgebildet.

Hierdurch kann auf besonders vorteilhafte Weise ein Aufbau des Heizelements bereitgestellt werden, in welchem die elektrisch leitende Zone auf deren Ober- und deren Unterseite durch die elektrisch isolierende Zone überdeckt und somit in diesen Bereichen vorzugsweise vollständig isoliert vorliegt.

Ein derartiger Aufbau eignet sich insbesondere zur Bereitstellung eines plattenförmigen Heizelements beispielsweise zur Anwendung in Industrieöfen oder Pressenheizeinrichtungen.

Zudem ist es erfindungsgemäß ebenfalls möglich, dass die elektrisch leitende Zone vollständig von der elektrisch isolierenden Zone umhüllt ist und so eine allseitige elektrische Isolation des Heizelements bereitgestellt wird.

Ein Umformwerkzeug weist einen Werkzeuggrundkörper sowie eine Heizeinrichtung auf, welche einem umzuformenden Werkzeug zugewandt auf dem Werkzeuggrundkörper angeordnet ist.

Die Heizeinrichtung kann durch mindestens ein durch das erfindungsgemäße Verfahren hergestelltes Heizelement gebildet werden, wobei vorliegend die elektrisch isolierende Zone als Deckschicht und als Basisschicht und die elektrisch leitende Zone als eine, zwischen Deck- und Basisschicht angeordnete, Zwischenschicht ausgebildet sind.

Das Umformwerkzeug kann beispielsweise als Presse ausgebildet sein, in welcher der Werkzeuggrundkörper durch eine Prägematrize oder unmittelbar durch einen hydraulischen Stempel gebildet wird. Das Heizelement stellt in diesem Fall einen Aufsatz des Stempels dar, durch welchen während eines Pressvorgangs die Presskraft auf das umzuformende Werkstück, beispielsweise ein Metallblech, ein metallisches Halbzeug oder ein flächiges, polymeres Halbzeug, auch als Organobleich bezeichnet, übertragen wird.

Gleichzeitig ist mittels des Heizelements als besonderer Vorteil eine Erwärmung des Werkstücks während des Umformvorgangs und somit eine verbesserte Umformbarkeit des Werkstücks bereitstellbar.

Der besondere technologische Vorteil dieses Umformwerkzeugs wird durch das Heizelement derart bewirkt, dass das Heizelement aufgrund dessen Ausbildung als monolithischer Siliziumcarbid-Körper zum einen sehr fest und abrasionsbeständig ist, sodass insbesondere große Presskräfte auf das Werkstück aufbringbar sind, und dass das Heizelement zum anderen gegenüber dem Werkstück elektrisch isolierend ausgebildet ist.

Ein besonderer Vorteil besteht darin, dass mittels des Heizelements die Wärmeerzeugung unmittelbar an der Berührungsfläche zum Werkstück durchführbar ist, wodurch ein schnelleres Aufheizen möglich ist und weniger Wärme in den Werkzeuggrundkörper eingetragen wird.

Ein erfindungsgemäßes Verfahren zur Herstellung eines Heizelements, gebildet durch einen Siliziumcarbid-Körper, wobei der Siliziumcarbid-Körper eine elektrisch isolierende Zone und eine elektrisch leitende Zone aufweist, wobei das Siliziumcarbid in der elektrisch isolierenden Zone als N-dotiertes Siliziumcarbid vorliegt, und wobei die elektrisch isolierende Zone und die elektrisch leitende Zone mittels Sintern derart miteinander verbunden sind, dass der Siliziumcarbid-Körper monolithisch vorliegt, und wobei eine Oberflächenschicht des Siliziumcarbid-Körpers zumindest abschnittsweise durch die elektrisch isolierende Zone gebildet wird, weist die nachfolgend beschriebenen Verfahrensschritte auf:
a) Bereitstellen des Grünteils durch Formgebung unter Bereitstellen der elektrisch isolierenden Zone und der elektrisch leitenden Zone,
b) Bereitstellen des monolithischen Siliziumcarbid-Körpers mittels drucklosem Sintern des Grünteils.

Im ersten Verfahrensschritt a) werden die elektrisch isolierende Zone und die elektrisch leitende Zone des Heizelements bereitgestellt.
Die Bereitstellung der Zonen aus Siliziumcarbid erfolgt vorzugsweise auf Pulver- oder Granulatbasis, wobei beispielsweise sprühgetrocknete Pulver oder Granulate in der entsprechenden Siliziumcarbid-Zusammensetzung angewandt werden. Möglich sind aber auch andere bekannte Formgebungsverfahren wie beispielsweise plastische Formgebung.

Die beiden Zonen des Heizelements werden in Verfahrensschritt a) zudem vorzugsweise in einer entsprechenden Form, beispielsweise eine Axial-Pressform, übereinander geschichtet.

Es erfolgt somit die Formgebung der Zonen und die Bereitstellung des Grünteils, wobei das Grünteil bereits weitestgehend der späteren Form des Heizelements entspricht. Hierzu werden die übereinander geschichteten Zonen vorzugsweise mit einer Presskraft beaufschlagt und so vorverdichtet.
Nach dem Verdichten liegen die Zonen als geformtes Grünteil zur Weiterverarbeitung vor.
Optional kann der Siliziumcarbid-Körper anschließend in einem zusätzlichen Verfahrensschritt a1) isostatisch nachverdichtet und/oder, sofern notwendig, mechanisch nachbearbeitet werden.

Die Weiterverarbeitung des Grünteils erfolgt in Verfahrensschritt b) durch Sintern, wobei erfindungsgemäß ein druckloses Sintern erfolgt. Das erfindungsgemäß drucklose Sintern wird durch die Verwendung von stofflich ähnlichen, sinterfähigen Siliziumcarbid-Zusammensetzungen ermöglicht, wobei in der elektrisch isolierenden Zone N-dotiertes Siliziumcarbid vorliegt. Es wurde gefunden, dass die elektrisch isolierende Zone und die elektrisch leitfähige Zone aufgrund ihrer stofflichen Beschaffenheit und insbesondere aufgrund der annähernden stofflichen Gleichheit auch drucklos zu einem dichten und kompakten Verbund gesintert und so der monolithische Siliziumcarbid-Körper bereitgestellt werden kann.
Dies bewirkt den besonderen Vorteil, dass ein monolithischer keramischer Heizkörper mit besonders guten mechanischen, Korrosions- und Wärmeleiteigenschaften, auch in komplizierten Geometrien, wie dies bei dem Heißpressen nicht möglich wäre, bereitgestellt werden kann. Zudem kann als weiterer Vorteil der Sintervorgang im Vergleich zum Heißpressen besonders kostengünstig durchgeführt werden

In einer vorteilhaften Weiterbildung schließt sich nach Verfahrensschritt b) ein zusätzlicher Verfahrensschritt c) an, in welchem der elektrisch leitenden Zone elektrische Anschlussmittel wie beispielsweise Stecker oder sonstige Kontakte zugeordnet werden, über welche die elektrisch leitende Zone elektrisch kontaktiert wird.

Die Erfindung wird als Ausführungsbeispiel anhand eines durch das Verfahren hergestellten keramischen Heizelements durch

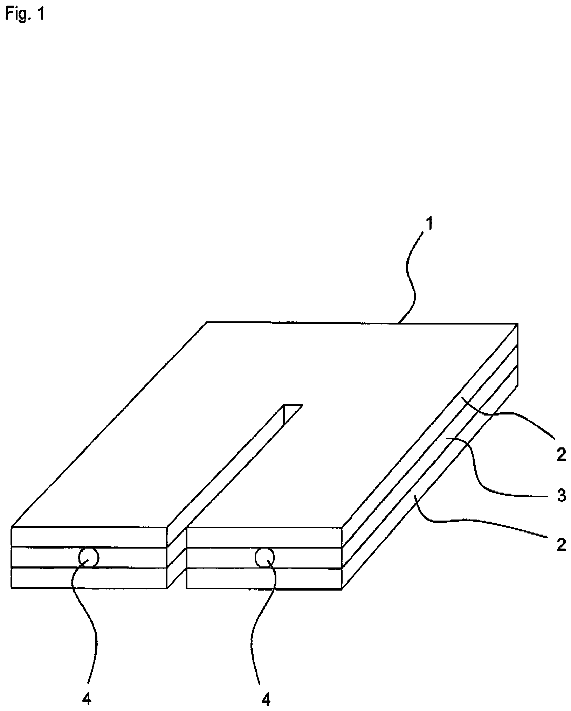

Fig. 1 perspektivische Ansicht eines durch das erfindungsgemäße Verfahren hergestellten Heizelements näher beschrieben.

Zudem werden im Anschluss daran das Heizelement als Bestandteil einer Heizeinrichtung eines Umformwerkzeuges und ein beispielhaftes Verfahren zur Bereitstellung des Heizelements näher erläutert.

Fig. 1 zeigt ein durch das erfindungsgemäße Verfahren hergestelltes Heizelement in einer Ausführungsform als plattenförmiges Heizelement.

Das Heizelement wird durch einen Siliziumcarbid-Körper 1 mit einem Widerstandsheizleiter gebildet, wobei der Siliziumcarbid-Körper 1 eine elektrisch isolierende Zone 2 sowie eine elektrisch leitende Zone 3 aufweist.

Die elektrisch isolierende Zone 2 besteht vorliegend aus einer N-dotierten (stickstoffdotierten) Siliziumcarbid-Zusammensetzung mit einem spezifischen elektrischen Widerstand von ≥ 1 ∗ 10⁶ Ω ∗ *cm* bei Raumtemperatur und ist besonders vorteilhaft derart ausgeführt, dass diese die elektrisch leitende Zone 3 des Siliziumcarbid-Körpers 1 auf deren Ober- und Unterseite überdeckt, sodass durch die elektrisch isolierende Zone 2 eine Deck- und eine Basisschicht des Heizelements bereitgestellt werden.

Der Widerstandsheizleiter wird vorliegend durch die elektrisch leitende Zone 3 gebildet, welche als eine, zwischen der Deck- und der Basisschicht angeordnete, Zwischenschicht des Siliziumcarbid-Körpers 1 ausgebildet ist und welche durch eine Siliziumcarbid--Zusammensetzung mit einem spezifischen elektrischen Widerstand von ≤ 500 Ω ∗ *cm* bei Raumtemperatur bereitgestellt wird.

Während des Sinterns des Siliziumcarbid-Körpers 1 mit den Zonen 2 und 3 wird eine stoffliche Verbindung des Siliziumcarbids bereitgestellt, welche ohne Unterbrechung zwischen den Zonen 2 und 3 vorliegt. Gleichzeitig bleiben die unterschiedlichen elektrischen Eigenschaften der Zonen 1 und 2 erhalten. Allein zur Veranschaulichung sind die Zonen 1 und 2 des Siliziumcarbid-Körpers 1 vorliegend als voneinander getrennte Schichten dargestellt, obwohl der Siliziumcarbid-Körper 1 als monolithischer Körper vorliegt.

Die elektrisch leitende Zone 3 des Siliziumcarbid-Körpers 1 ist vorliegend mit elektrischen Anschlussmitteln 4 versehen, durch welche ein elektrischer Strom in die elektrisch leitende Zone 3 ein- und ausgeleitet werden kann.
Bei einer bestimmungsgemäßen Verwendung wird mittels elektrischen Stroms die elektrisch leitende Zone 3 nach dem ohmschen Widerstandsprinzip aufgeheizt.
Durch die sehr guten Wärmeleiteigenschaften von Siliziumcarbid wird die Wärme aus der elektrisch leitenden Zone 3 unmittelbar in die elektrisch isolierende Zone 2 übertragen und diese somit ebenfalls aufgeheizt.
Auf diese Weise kann als besonderer Vorteil ein besonders schnelles Aufheizen des Heizelements und eine hohe Heizleistung pro Fläche der Oberfläche des Heizelements bereitgestellt und somit dessen Effizienz gegenüber herkömmlichen Heizvorrichtungen verbessert werden.

Als weiterer Vorteil des hier aufgezeigten Heizelements kommt es durch die elektrisch isolierende Zone 2 als Deck- und Basisschicht zu keinerlei unerwünschter, elektrischer Übertragung auf ein zu erwärmendes Werkstück oder auf eine sonstige leitfähige Struktur einer Aufnahme des Heizelements, wodurch das Heizelement ohne zusätzliche Isolierungsmaßnahmen eingesetzt werden kann.

Durch die Verwendung des Siliziumcarbids kann vorliegend ein besonders widerstandsfähiges, abrasions-, korrosions- und oxidationsbeständiges Heizelement bereitgestellt werden, welches sich zudem durch eine hervorragende Wärmeleitfähigkeit und eine hohe spezifische Leistung, sowie eine hohe Temperaturbeständigkeit auszeichnet.

Die Anwendung eines durch das erfindungsgemäße Verfahren hergestellten Heizelements wird nachfolgend am Beispiel eines Umformwerkzeuges näher erläutert.

In einem solchen Umformwerkzeug weist eine Heizeinrichtung ein durch das erfindungsgemäße Verfahren hergestelltes Heizelement auf, wobei die Heizeinrichtung sowohl ein, als auch mehrere durch das erfindungsgemäße Verfahren hergestellte Heizelemente aufweisen kann und wobei das Umformwerkzeug als hydraulische, beheizbare Presse insbesondere zum Umformen von Werkstücken aus Metallblech oder Organoblech ausgebildet ist.

Das Heizelement als Bestandteil der Heizeinrichtung ist an einem hydraulisch betätigten Stempel der Presse derart angeordnet, dass ein Presskontakt mit dem umzuformenden Werkstück ausschließlich über das Heizelement bereitgestellt wird.

Die besonders vorteilhaften Eigenschaften des Heizelements in Bezug auf Abrasions-, Korrosions- und Oxidationsbeständigkeit sowie in Bezug auf dessen Festigkeit wirken sich insbesondere positiv auf die Standzeit eines hier aufgezeigten Umformwerkzeuges aus.

Zudem werden durch das schnelle Aufheizen des Heizelements ein hoher Wirkungsgrad des Umformwerkzeuges und damit eine große Effizienz und Wirtschaftlichkeit des Umformprozesses bereitgestellt.

Die Offenbarung ist nicht allein auf das vorliegende Ausführungsbeispiel beschränkt. Vielmehr ist es für den Fachmann ersichtlich, dass ein durch das erfindungsgemäße Verfahren hergestelltes Heizelement beispielsweise auch in Einsätzen von Spritzguss-Werkzeugen, Heißkanal- und Düsenheizungen, Heizschienen und Heizmessern, Kontaktheizern in der Halbleiter-Industrie oder in freistehenden Strahlungsheizern in aggressiven Atmosphären angewendet werden kann.

Das erfindungsgemäß Verfahren zur Herstellung eines Heizelements wird anhand des nachfolgenden Ausführungsbeispiels erläutert.

In Verfahrensschritt a) werden vorliegend die elektrisch isolierende Zone und die elektrisch leitende Zone als Schichten aus sprühgetrockneten Granulaten der jeweils anzuwendenden Siliziumcarbid-Variante bereitgestellt, welche schichtweise in eine Axial-Pressform, bestehend aus einem Ober- und einem Unterstempel sowie einem Pressmantel, eingebracht werden.

Die Axial-Pressform entspricht in diesem Zusammenhang der späteren Form des Heizelements. Zudem wird zum Einbringen der Schichten in die Axial-Pressform die sogenannte Schiebertechnik angewendet. Dabei wird der untere Pressstempel um einen vorberechneten Weg abgesenkt, eine, über separat zu ermittelnde Verdichtungsfaktoren der Granulate, zu berechnende Menge an Granulat der Siliziumcarbid-Variante der elektrisch isolierenden Schicht eingebracht und von Hand oder maschinell glatt gestrichen. Dem folgt eine leichte Vorverdichtung bis maximal 1/3 des vorgesehenen Gesamt-Pressdrucks. Die entstandene glatte Oberfläche wird mit einem kammähnlichen Werkzeug wieder leicht aufgeraut und es wird anschließend eine Negativ-Struktur der vorgesehenen elektrisch leitenden Zone in Form von Gummi, Styropor oder einem ähnlichen, leicht komprimierbaren Material eingelegt. Die Negativ-Struktur weist vorzugsweise an einer Stelle eine Unterteilung auf, sodass im weiteren Verlauf eine Leiterbahn bereitgestellt werden kann. Um darüber hinaus auch eine seitliche elektrische Isolierung des flächigen Heizelements bereitzustellen, ist ferner ein äußerer dünner Rahmen vorgesehen, welcher der Innenkontur der Pressform folgt und welcher ebenfalls als Negativ-Struktur ausgebildet ist. In die resultierenden Hohlräume der eingelegten Negativ-Strukturen wird Granulat der Siliziumcarbid-Variante der elektrisch leitfähigen Schicht eingebracht und von Hand oder maschinell glatt gestrichen. Die Höhe des eingebrachten Granulats der Siliziumcarbid-Variante der elektrisch leitfähigen Schicht ist dabei vorzugsweise nicht höher als die Negativ-Strukturen selbst.

Anschließend folgt eine weitere leichte Vorverdichtung bis maximal 1/3 des vorgesehenen Gesamt-Pressdrucks, danach werden die die Negativ-Strukturen bildenden Teile vorsichtig entfernt. Durch ein Anheben des Mantels der Axial-Pressform wird ferner ein Raum zum Einfüllen des Granulats der Siliziumcarbid-Variante der elektrisch isolierenden Schicht geschaffen, durch welches die obere Deckschicht des Heizelements gebildet wird und wobei hierzu wie oben beschrieben vorgegangen wird.

Anschließend erfolgt eine Formgebung mittels Pressen und damit das Bereitstellen eines Grünteils, welches in seiner äußeren Kontur bereits weitestgehend dem herzustellenden Heizelement entspricht. Hierzu werden die Schichten in der Axial-Pressform uniaxial gepresst.

Im Anschluss wird das Grünteil aus der Axial-Pressform entformt und für die Weiterverarbeitung bereitgestellt.

Optional kann das Grünteil auch zusätzlich isostatisch nachverdichtet oder einer mechanischen Nachbearbeitung unterzogen werden.

Das fertige Grünteil wird anschließend in Verfahrensschritt b) drucklos gesintert, indem das Grünteil, unter definiertem Inertgasdruck von < 1 bar, lediglich einer Wärmebeaufschlagung unterzogen und auf diese Weise abschließend zu dem monolithischen Siliziumcarbid-Körper mit der elektrisch isolierenden und der elektrisch leitenden Zone versintert wird.

Der besondere technologische Vorteil des erfindungsgemäßen Verfahrens begründet sich insbesondere auf dem drucklosen Sintern, durch welches eine besonders kostengünstige Herstellung des Heizelements bereitgestellt werden kann.

Im abschließenden Verfahrensschritt c) wird die elektrisch leitende Zone mit entsprechenden elektrischen Anschlussmitteln versehen. Hierbei erfolgt beispielsweise eine Kontaktierung der elektrisch leitenden Zone mittels Aktivlöten.

### Verwendete Bezugszeichen

- 1: Siliziumcarbid-Körper
- 2: elektrisch isolierende Zone
- 3: elektrisch leitende Zone
- 4: elektrische Anschlussmittel

## Patentansprüche

1. Verfahren zur Herstellung eines Heizelements, gebildet durch einen Siliziumcarbid-Körper, wobei der Siliziumcarbid-Körper (1) eine elektrisch isolierende Zone (2) und eine elektrisch leitende Zone (3) aufweist, wobei das Siliziumcarbid in der elektrisch isolierenden Zone als N-dotiertes Siliziumcarbid vorliegt,
und wobei die elektrisch isolierende Zone und die elektrisch leitende Zone mittels Sintern derart miteinander verbunden sind, dass der Siliziumcarbid-Körper monolithisch vorliegt,
und wobei eine Oberflächenschicht des Siliziumcarbid-Körpers zumindest abschnittsweise durch die elektrisch isolierende Zone gebildet wird, aufweisend die folgenden Verfahrensschritte:
a) Bereitstellen eines Grünteils aus sinterfähigen Siliziumcarbid-Zusammensetzungen durch Formgebung unter Bereitstellen der elektrisch isolierenden Zone aus N-dotiertem Siliziumcarbid und der elektrisch leitenden Zone,
b) Bereitstellen des monolithischen Siliziumcarbid-Körpers mittels drucklosem Sintern des Grünteils.

2. Verfahren nach Anspruch 1,
aufweisend folgenden zusätzlichen Verfahrensschritt:
c) Zuordnen von elektrischen Anschlussmitteln (4) zu der elektrisch leitenden Zone.

## Claims

1. A method for manufacturing a heating element, formed by a silicon carbide body, wherein the silicon carbide body (1) comprises an electrically insulating zone (2) and an electrically conductive zone,
wherein the silicon carbide is provided as an N-doped silicon carbide in the electrically insulating zone,
and wherein the electrically insulating zone and the electrically conductive zone are connected together by sintering in such a way that the silicon carbide body is a monolithic body,
and wherein a surface layer of the silicon carbide body is formed by the electrically insulating zone at least in sections,
comprising the following process steps:
a) preparation of a green compact of sinterable silicon carbide compositions by shaping with the electrically insulating zone of N-doped silicon carbide and the electrically conductive zone provided,
b) preparation of the monolithic silicon carbide body by pressureless sintering of the green compact.

2. The method according to claim 1,
comprising the following additional process step:
c) assignment of electrical connection means (4) to the electrically conductive zone.

## Revendications

1. Procédé pour la fabrication d'un élément chauffant, formé par un corps en carbure de silicium, ledit corps en carbure de silicium (1) ayant une zone électriquement isolante (2) et une zone électriquement conductrice, où le carbure de silicium est présent dans la zone électriquement isolante sous forme de carbure de silicium dopé à l'azote,
et où la zone électriquement isolante et la zone électriquement conductrice sont reliées entre elles par frittage de telle sorte que le corps en carbure de silicium soit monolithique,
et où une couche de surface du corps en carbure de silicium est formée au moins partiellement par la zone électriquement isolante,
comportant les suivantes étapes de procédé:
a) Fournir une partie verte des compositions de carbure de silicium frittable par façonnage, en fournissant la zone électriquement isolante du carbure de silicium dopé à l'azote et la zone électriquement conductrice,
b) Préparer le corps monolithique en carbure de silicium par frittage sans pression de la partie verte.

2. Procédé suivant la revendication 1,
comportant la suivante étape de procédé supplémentaire:
c) Assigner les moyens de connexion électrique (4) à la zone électriquement conductrice.
